# EUROPÄISCHE PATENTANMELDUNG

(11) **EP 2 353 844 A1**
(43) Veröffentlichungstag der Anmeldung: **10.08.2011**
(21) Anmeldenummer: 10001214.5
(22) Anmeldetag: 05.02.2010
(51) Int. Cl.: B29C 55/02, B29C 55/18, B29C 59/04, B29C 59/00, B29C 55/00

(54) **Steife Folie mit hoher Durchstoßfestigkeit für Verpackungen und technische Anwendungen und Verfahren zu ihrer Herstellung**

(71) Anmelder: RKW SE, 67227 Frankenthal (DE)
(72) Erfinder: Grefenstein, Achim, 67122 Altrip (DE); Brandmaier, Florian, 83059 Kolbenmoor (DE); Maier, Leonhard, 83547 Babensham (DE)
(74) Vertreter: Wagner, Jutta

(57) **Zusammenfassung**

Die vorliegende Erfindung betrifft eine Folie und ein Verfahren zu ihrer Herstellung, wobei eine Ausgangsfolienbahn umfassend wenigstens eine Schicht mit einem Gehalt an Polypropylen von wenigstens 45 Gew.-% und mit einem Gehalt an Polyethylen in derselben oder einer weiteren Schicht hergestellt wird, die Ausgangsfolienbahn bis zum schmelzeflüssigen Zustand des Polyethylen, jedoch unterhalb des schmelzeflüssigen Zustandes des Polypropylen erwärmt wird und die erwärmte Ausgangsfolienbahn durch einen gekühlten Walzenspalt geführt wird.

## Beschreibung

Die vorliegende Erfindung betrifft Folien mit hoher Steifigkeit und hoher Durchstoßfestigkeit, die sich für Verpackungen und andere, technische Anwendungen eignen.

Eine immer weitere Verringerung der Foliendicke wird bei vielen Verpackungsanwendungen und auch der Anwendung als Oberflächenschutzfolie durch die mangelnde Zähigkeit und insbesondere die mangelnde Durchstoßfestigkeit dünnerer Folien beschränkt. Verwendet man zähere Werkstoffe, so sind diese oft teurer und führen im Allgemeinen auch zu einer deutlich verminderten Steifigkeit, was das Verhalten auf vielen Abpackmaschinen negativ beeinflusst und geringere Liniengeschwindigkeiten erfordert.

Aus EP 1 716 830 B1 sind Folien bekannt, welche mittels einer nach der Extrusion durch Heißprägen vorgenommenen Wärmebehandlung und Umkristallisation der Polymermischung eine deutliche Verbesserung der mechanischen Eigenschaften erfahren. Diese Folien bestehen aus Gemischen aus Polyethylen (PE) und Polypropylen (PP), wobei das Polyethylen stets die Überschusskomponente (max. 70 Teile PP bezogen auf 100 Teile PE) und somit die Matrix bildet. Diese Folien werden aufgrund ihrer hohen Weichheit für Hygieneanwendungen eingesetzt. Aufgrund ihrer relativ geringen Steifigkeit (auch im Vergleich zu den Messwerten vor der Wärmebehandlung) kommt ein Einsatz als Verpackungsfolie nicht in Betracht und ist auch nicht erwähnt.

In der Wärme behandelte Platten und Folien für Verpackungszwecke werden in EP 616 880 B1 beschrieben. Jedoch wird lediglich eine Verbesserung der optischen Eigenschaften, wie Transparenz angestrebt. Auch werden keine Mischungen aus unterschiedlichen Polymeren in den Beispielen genannt. Es handelt sich um Platten und Folien aus reinem Polypropylen.

Ziel der Erfindung ist es, Folien mit einer signifikant erhöhten Durchstoßfestigkeit bei gleichzeitig kaum veränderter Steifigkeit und Festigkeit im Vergleich zu heute üblichen Verpackungsfolien bereitzustellen.

Überraschend wurde nun gefunden, dass Folien mit PP als Matrixkomponente (Gesamtanteil in mindestens einer Schicht mind. 45 %) gemischt mit Polyethylen nach einer Wärmebehandlung bei Temperaturen zwischen den Schmelzpunkten der verwendeten Komponenten hervorragende Durchstoßfestigkeiten unter Erreichung einer im Vergleich zu den aus EP 1 716 830 B1 bekannten Hygienefolien hohen Steifigkeit erreichen.

Im Vergleich zu typischen Verpackungsfolien aus Gemischen von Polyethylen niederer Dichte (LDPE) und linearem Polyethylen niederer Dichte (LLDPE) wurde bei fast gleicher Steifigkeit eine um über das 3-fache erhöhte Zähigkeit gefunden. Dies wurde durch den Polypropylenanteil von mindestens 45 % in mindestens einer Schicht erreicht. Vorzugsweise beträgt der PP-Anteil mindestens 50 %, insbesondere mindestens 60 %.

Das PE kann sowohl in derselben Schicht wie das PP, als auch in einer separaten Schicht vorliegen.

Bei einschichtigen Folien sind Gemische von 45 bis 80 % PP mit 55 bis 20% PE bevorzugt, insbesondere Gemische von 55 bis 80 % PP mit 20 bis 45% PE.

Vorteilhaft ist ein Mehrschichtaufbau. Hierbei kann eine Schicht aus PP und eine zweite Schicht aus PE vorgesehen werden. Ebenso kann in einer oder mehreren oder allen Schichten ein Gemisch von PP und PE vorliegen. Wichtig ist, dass erfindungsgemäß wenigstens eine Schicht mit wenigstens 45 % PP vorhanden ist und in dieser oder in wenigstens einer weiteren Schicht PE vorliegt. Erfindungsgemäß brauchbar sind daher mehrschichtige Folien mit einer ersten Schicht mit 45 bis 100 % PP und einer oder mehreren weiteren Schichten mit bis zu 100 % PE.

Bevorzugt ist ein mindestens dreischichtiger Aufbau, wobei das PP in einer mittleren oder der Kernschicht vorliegt und die Deckschichten aus PE einen geringeren PP-Anteil von < 30 % haben bis hin zu PP-freien Deckschichten. Die Kernschicht kann vollständig aus PP erstellt sein, oder aus einem Gemisch von mindestens 45 % PP mit bis zu 55 % PE, vorzugsweise aus einem Gemisch mit 50 bis 90 % PP und 10 bis 50 % PE. Es ist weiter bevorzugt, wenn die Kernschicht dicker ist, als die Deckschichten.

Besonders bevorzugt sind mehrschichtige, insbesondere dreischichtige Folien mit einer ersten Schicht mit 45 bis 100 %, vorzugsweise 60 bis 80 % oder 100 % PP und wenigstens einer weiteren Schicht aus PE, oder einem Gemisch von PE mit bis zu 30 % PP. Ganz besonders bevorzugt sind dreischichtige Folien mit einer mittleren oder Kernschicht aus 60 bis 80 % PP und Deckschichten aus PE oder mit einer Kernschicht aus PP und Deckschichten aus PE.

Es versteht sich, dass bei den erfindungsgemäßen Folien in allen Schichten übliche Additive, Füllstoffe etc. in den jeweils bekannten Mengen und in einem untergeordneten Anteil von bis zu 20 Gew.-%, in der Regel nicht mehr als 10 Gew.-% und insbesondere nicht mehr als 5 Gew.-% andere Polymere zugesetzt sein können.

Soweit nichts anderes angegeben ist, umfasst der Begriff Polymer Homo- und Copolymere sowie Mischungen aus zwei oder mehr Polymeren. In der Regel weisen Polymere eine Molmasse von mindestens 10.000, typischerweise von einigen 10.000 bis einigen 100.000 g/mol auf. Bei Copolymeren kann es sich z.B. um statistische, alternierende, Block- sowie Pfropfcolpolymere handeln.

Der Begriff Folie bezeichnet im Rahmen der vorliegenden Erfindung flächige Gebilde, deren Breite und Länge die Dicke um ein vielfaches übersteigt. Die Dicke beträgt in der Regel unter einem Millimeter bis hin zu wenigen Mikrometern.

Als PP eignen sich Homopolymere, Random-Copolymere und Block-Copolymere. Vorzugsweise kommen PP-Copolymere, insbesondere Random-Copolymere oder heterophasische Block-Copolymere zum Einsatz. Bevorzugtes Comonomer ist Ethylen, insbesondere in Mengen von 10 bis 30%.

Als PE eignen sich z.B. LDPE, LLDPE und Gemische von zwei oder mehr Ethylenpolymeren. Ein bevorzugtes PE ist ein Gemisch aus LDPE und LLDPE, vorzugsweise ein Gemisch aus 50 bis 90 % LDPE und 50 bis 10 % LLDPE, insbesondere aus 60 bis 80 % LDPE und 40 bis 20 % LLDPE. Weitere bevorzugte PE sind Gemische aus LDPE, LLDPE, und Ethylenvinylacetat (EVA). Das Comonomer im LLDPE ist vorzugsweise ein Buten, Hexen oder Octen.

Die Prägetemperatur liegt erfindungsgemäß zwischen den Schmelztemperaturen der PE- und der PP-Komponente. Unter Schmelzpunkt oder Schmelztemperatur wird im Rahmen der vorliegenden Anmeldung im Hinblick auf die polymeren Materialien diejenige Temperatur verstanden, bei welcher der Schubmodul des Materials gegen null geht. Soweit es sich um Polymere mit kristallinen Anteilen oder um kristalline Polymere handelt, sind bei dieser Temperatur (auch) die kristallinen Bereiche geschmolzen. In Bezug auf eine Lage, z.B. eine Folie, ist der Schmelzpunkt diejenige Temperatur, bei der die Lage insgesamt aufschmilzt. Sofern die Lage nicht nur aus einem Material besteht, kommt es nicht darauf an, dass sämtliche Komponenten für sich eine Schmelztemperatur bei oder unterhalb des Schmelzpunktes der Lage aufweisen, vielmehr entspricht der Schmelzpunkt der Lage regelmäßig der Schmelztemperatur der thermoplastischen Hauptkomponente. So weist z.B. eine Folie enthaltend 60 % Calciumcarbonat, 32 % eines Polymers mit einer Kristallitschmelztemperatur von 138°C und 8 % eines Polymers mit einer Kristallitschmelztemperatur von 158°C einen Schmelzpunkt von etwa 138 °C auf.

Erstaunlicherweise zeichnen sich die erfindungsgemäßen Folien nicht nur durch ihre guten mechanischen Eigenschaften, sondern auch durch ihre gute Verschweißbarkeit und das geradlinige Rissverhalten aus. Beide Eigenschaften sind bei Verpackungsfolien erwünscht.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

Beispiele

Folgende Materialien wurden verwendet:

| Material | Beschreibung | Dichte bei 23°C | MFI nach ISO 1133* | DSC-Schmelz-punkt ISO 3146 |
|---|---|---|---|---|
| LDPE | | 0,923 kg/dm³ | 0,75 g/10 min | 111°C |
| LLDPE1 | C6 als Comonomer | 0,92 kg/dm³ | 0,9 g/10 min | 127 °C |
| LLDPE2 | C8 als Comonomer | 0,92 kg/dm³ | 1,1 g/10 min | 127 °C |
| PP1 | Random-Copolymer | 0,91 kg/dm³ | 1,5 g/10 min | 135 °C |
| PP2 | Blockcopolymer | 0,905 kg/dm³ | 3,0 g/10 min | 166 °C |
| PP3 | Homopolymer | 0,905 kg/dm³ | 2,8 g/10 min | 166°C |

| | | | | |
|---|---|---|---|---|
| *MFI gemessen bei 190°C / 2,16 kg für PE und 230°C / 2,16 kg für PP) | | | | |

Beispiel 1 Es wurde eine symmetrische Folie mit einer Kernschicht von 21 µm und zwei Deckschichten von 12 µm im Blasfolien-Verfahren hergestellt. Die Kernschicht bestand aus PP1, die Deckschichten aus einer Mischung von 70 % LDPE und 30 % LLDPE1. Die Ausgangsfolie wurde auf 130 °C erwärmt und durch einen gekühlten Walzenspalt gefahren. Für die Folie wurden Festigkeit, Steifigkeit (Sekantenmodul bei 5 % Dehnung aus der Spannungs-Dehnungskurve abgelesen) und Bruchdehnung jeweils in Maschinen- und Querrichtung nach ISO 527 an 15 mm breiten Streifen bei einer Abzugsgeschwindigkeit von 500 mm/min gemessen.

Die maximale Impacthöhe wird wie folgt gemessen: Die Folie wird einzeln, planliegend und faltenfrei in das Prüfgerät eingespannt. Ein Metallbolzen mit einem Gewicht von 100 g wird aus unterschiedlichen Höhen auf die eingespannte Folie fallen gelassen. Ein Versuch gilt als schlecht, wenn die Folie an einem Punkt vollständig durchtrennt ist (Riss oder Loch), sonst als gut. Es sind stets mehrere Versuche durchzuführen. Als Impacthöhe wird diejenige Fallhöhe bezeichnet, bei der zwei Versuche gut und zwei Versuche schlecht sind. Zur Bestimmung wird zunächst die ungefähre Höhe ermittelt und dann in 5 cm Schritten die Höhe verringert, wenn drei oder mehr Versuche schlecht sind bzw. erhöht wenn mehr als drei Versuche gut sind.

Die Ergebnisse sind in Tabelle 2 aufgeführt.

Vergleichsbeispiel 1
Es wurde eine Ausgangsfolie wie in Beispiel 1 hergestellt. Die Prägung erfolgte jedoch bei 114 °C, d.h. unterhalb der Schmelzetemperatur auch der Polyethylene. Die mechanischen Eigenschaften sind ebenfalls in Tabelle 2 angegeben.

Beispiel 2
Es wurde eine Folie wie in Beispiel 1 hergestellt, jedoch mit einer Kernschicht aus 60 % PP1 und 40 % LLDPE2. Die mechanischen Eigenschaften sind ebenfalls in Tabelle 2 angegeben.

Vergleichsbeispiel 2
Es wurde eine Folie wie in Beispiel 1 hergestellt, jedoch mit 25 % PP1 und 75 % LLDPE2 in der Kernschicht. Die mechanischen Eigenschaften sind ebenfalls in Tabelle 2 angegeben.

Beispiel 3
Es wurde eine Folie wie in Beispiel 1 hergestellt, jedoch mit einer Kernschicht aus 100 % PP2 und einer Prägung bei 153 °C. Die mechanischen Eigenschaften sind ebenfalls in Tabelle 2 angegeben.

Vergleichsbeispiel 4
Es wurde eine Folie wie in Beispiel 1 hergestellt, jedoch mit 70 % LDPE und 30 % LLDPE2 in der Kernschicht. Es erfolgte keine Prägung. Die mechanischen Eigenschaften sind ebenfalls in Tabelle 2 angegeben. Diese Folie entspricht den derzeit häufig verwendeten Verpackungsfolien.

Beispiel 5
Es wurde eine Folie wie in Beispiel 1 hergestellt, jedoch mit einer Kernschicht aus 100 % PP3 und einer Prägung bei 153 °C. Die mechanischen Eigenschaften sind ebenfalls in Tabelle 2 angegeben.

Vergleichsbeispiel 5
Es wurde eine Ausgangsfolie wie in Beispiel 5 hergestellt. Die Prägung erfolgte jedoch bei 114 °C, d.h. unterhalb der Schmelzetemperatur auch der Polyethylene. Die mechanischen Eigenschaften sind ebenfalls in Tabelle 2 angegeben.

**Tabelle 2**

| **Beispiel** | **Aufbau Kern** | **Prägetemperatur [°C]** | **Festigkeit [N/mm²]** | **Steifigkeit [N/mm²]** | **Bruchdehnung [%]** | **max. Impact-höhe [mm]** |
|---|---|---|---|---|---|---|
| Beispiel 1 | 100 % PP1 | 130 | 36,9 / 30,9 | 265 / 256 | 473/634 | 1200 |
| Vergleichsbeispiel 1 | 100%PP1 | 114 | 31,4/27,6 | 278 / 261 | 421/650 | 500 |
| Beispiel 2 | 60 % PP1 40 % LDPE | 130 | 34,7 / 36,5 | 164/174 | 567 / 867 | 1500 |
| Vergleichsbeispiel 2 | 25 % PP1 75 % LDPE | 130 | 34,1 / 30,2 | 111/103 | 540 / 775 | 1250 |
| Beispiel 3 | 100 % PP2 | 153 | 38,6 / 27,6 | 463 / 385 | 483 / 605 | 1050 |
| Vergleichsbeispiel 4 | 70 % LDPE 30 % LLDPE2 | ungeprägt | 26,1 / 27,1 | 163/157 | 423 / 672 | 450 |
| Beispiel 5 | 100 % PP3 | 153 | 38,3 / 30,1 | 532 / 432 | 474/638 | 430 |
| Vergleichsbeispiel 5 | 100 % PP3 | 114 | 37,3 / 22,2 | 548 / 445 | 451 / 340 | 350 |

Die Ergebnisse zeigen, dass sowohl die Zusammensetzung als auch die Heißprägung für den Erfolg wesentlich sind. So steigt die maximale Impacthöhe bei Einsatz von 100 % PP1 (Randomcopolymer) auf 1200 mm verglichen mit 450 mm bei der üblichen Mischung aus LDPE und LLDPE (Vergleichsbeispiel 4). Dabei bleibt die Bruchdehnung auf gleichem Niveau, während sich Festigkeit und Steifigkeit beachtlich steigern. Die gleiche Folie ergibt bei Prägetemperaturen unterhalb des Schmelzpunktes der am niedrigsten schmelzenden Komponente (Vergleichsbeispiel 1) kaum noch bessere Festigkeit oder Impacthöhe als die Referenzfolie. Die gewünschte Reduzierung der Foliendicke ist bei Vergleichsbeispiel 1 nicht möglich.

Ein Vergleich bezüglich der Menge an PP im Kern, Beispiel 1, 2 und Vergleichsbeispiel 2, demonstriert den Verlust an Steifigkeit bei zu geringem PP Gehalt. Durch Verwendung eines PP Block-Copolymeren, PP2 in Beispiel 3, lassen sich die Festigkeit und die Steifigkeit sehr stark steigern, die Impacthöhe ist deutlich höher als das Niveau der Referenz. Durch Verwendung eines PP Homopolymer, PP3 in Beispiel 5, lassen sich die Festigkeit und die Steifigkeit sehr stark steigern, die Impacthöhe bleibt hier auf dem Niveau der Referenz. Ohne die erfindungsgemäße Heißprägung, Vergleichsbeispiel 5, sind Festigkeit und Bruchdehnung in Querrichtung unzureichend, die Impacthöhe sinkt unter das Niveau der Referenzfolie, es müssten hier also dickere Folien eingesetzt werden.

Die Messergebnisse zeigen somit, dass mit der erfindungsgemäßen Folie, bei der sowohl eine Heißprägung als auch ein Anteil von mindestens 45 % PP und damit eine PP-Matrix in mindestens einer Schicht vorliegt, wesentlich steifere und auch festere Folien bereitgestellt werden konnten. Somit lassen sich im Vergleich zu den bisher üblicherweise verwendeten Folien die Dicken reduzieren, bzw. die Verpackung sicherer machen.

## Patentansprüche

1. Folie mit einem Sekanten-E-Modul bei 5% Dehnung, gemessen nach nach ISO 527 von wenigstens 160 N/mm² und einer Bruchfestigkeit nach ISO 527 von wenigstens 30 N/mm², umfassend wenigstens eine Schicht mit einem Gehalt an Polypropylen von wenigstens 45 Gew.-% und in dieser oder einer weiteren Schicht einen Gehalt an Polyethylen, erhältlich durch Herstellung einer Ausgangsfolienbahn, Erwärmung der Ausgangsfolienbahn bis zum schmelzeflüssigen Zustand des Polyethylen, jedoch unterhalb des schmelzeflüssigen Zustandes des Polypropylen und Führen der erwärmten Ausgangsfolienbahn durch einen gekühlten Walzenspalt.

2. Folie gemäß Anspruch 1, **dadurch gekennzeichnet, dass** die Folie einschichtig ist.

3. Folie gemäß Anspruch 2, **dadurch gekennzeichnet, dass** die eine Schicht maximal 55 Gew.-%, vorzugsweise maximal 45 Gew.-% Polyethylen enthält.

4. Folie gemäß Anspruch 1, **dadurch gekennzeichnet, dass** die Folie mehrschichtig, vorzugsweise dreischichtig ist.

5. Folie gemäß Anspruch 4, **dadurch gekennzeichnet, dass** die Folie eine Kernschicht mit einem Gehalt an Polypropylen von wenigstens 45 Gew.-% und ein oder zwei Deckschichten mit einem Gehalt an Polyethylen von wenigstens 70 Gew.-% umfasst.

6. Folie gemäß Anspruch 5, **dadurch gekennzeichnet, dass** die Deckschichten nur Ethylenpolymere, vorzugsweise Gemische aus LDPE und LLDPE, enthalten.

7. Folie gemäß mindestens einem der vorhergehenden Ansprüche, **dadurch gekennzeichnet, dass** das Polypropylen ausgewählt ist unter Homopolymeren, Random-Copolymeren, Block-Copolymeren, heterophasischen Block-Copolymeren oder Gemischen von zwei oder mehreren davon.

8. Folie gemäß Anspruch 7, **dadurch gekennzeichnet, dass** das Polypropylen ein Copolymer mit Ethylen, vorzugsweise ein Random-Copolymer mit Ethylen und insbesondere ein Random-Copolymer mit weniger als 20 Gew.-% Ethylen als Comonomer ist.

9. Folie gemäß mindestens einem der vorhergehenden Ansprüche, **dadurch gekennzeichnet, dass** das Polyethylen ausgewählt ist unter Polyethylen niederer Dichte, linearem Polyethylen niederer Dichte mit Buten, Hexen oder Octen als Comonomer, und Gemischen von zwei oder mehreren davon oder Gemischen davon mit Ethylenvinylacetat.

10. Folie gemäß Anspruch 9, **dadurch gekennzeichnet, dass** das Polyethylen ein Gemisch von Polyethylen niederer Dichte mit linearem Polyethylen niederer Dichte mit Buten, Hexen oder Octen als Comonomer ist.

11. Folie gemäß mindestens einem der Ansprüche 4 bis 10, **dadurch gekennzeichnet, dass** die Deckschichten dünner als die Kernschicht sind.

12. Folie gemäß mindestens einem der vorhergehenden Ansprüche, **dadurch gekennzeichnet, dass** die Ausgangsfolienbahn ein Dicke im Bereich von 10 bis 80 µm, vorzugsweise von 20 bis 60 µm aufweist.

13. Verfahren zur Herstellung einer Folie gemäß einem der Ansprüche 1 bis 12, **dadurch gekennzeichnet, dass** eine Ausgangsfolienbahn umfassend wenigstens eine Schicht mit einem Gehalt an Polypropylen von wenigstens 45 Gew.-% und mit einem Gehalt an Polyethylen in derselben oder einer weiteren Schicht hergestellt wird, die Ausgangsfolienbahn bis zum schmelzeflüssigen Zustand des Polyethylen, jedoch unterhalb des schmelzeflüssigen Zustandes des Polypropylen erwärmt wird und die erwärmte Ausgangsfolienbahn durch einen gekühlten Walzenspalt geführt wird.

14. Verfahren gemäß Anspruch 13, **dadurch gekennzeichnet, dass** die Kühlwalzen eine glatte oder eine strukturierte Oberfläche aufweisen.

15. Verfahren gemäß Anspruch 13 oder 14, **dadurch gekennzeichnet, dass** die Ausgangsfolienbahn eine durch Coextrusion hergestellte, mehrschichtige Ausgangsfolienbahn ist.

16. Verwendung einer Folie gemäß mindestens einem der Ansprüche 1 bis 12 als Verpackungsfolie oder Oberflächenschutzfolie.
